# EUROPÄISCHE PATENTSCHRIFT

(11) **EP 0 745 784 B1**
(45) Veröffentlichungstag und Bekanntmachung des Hinweises auf die Patenterteilung: **03.05.2000**
(21) Anmeldenummer: 96108538.8
(22) Anmeldetag: 29.05.1996
(51) Int. Cl.: F16F 15/173, F16C 17/10

(54) **Drehschwingungsdämpfer mit Lagereinrichtung**
Rotational vibration damper with bearing device
Amortisseur de vibration rotatif avec dispositif de palier

(30) Priorität: 31.05.1995 DE 19519261
(43) Veröffentlichungstag der Anmeldung: 04.12.1996
(73) Patentinhaber: HASSE & WREDE GmbH, D-12347 Berlin (DE)
(72) Erfinder: Pape, Rolf, 14169 Berlin (DE); Sandig, Jörg, Dr., 10143 Berlin (DE); Jens, Herrmann, 14059 Berlin (DE); Janner, Lutz, 12105 Berlin (DE)
(74) Vertreter: Specht, Peter, Dipl.-Phys.

(56) Entgegenhaltungen:
- EP-A- 0 423 243
- DE-A- 2 118 864
- DE-A- 4 243 781
- DE-B- 1 292 949
- DE-C- 951 965
- GB-A- 1 397 571
- GB-A- 2 126 669
- US-A- 3 495 459
- US-A- 3 873 168

## Beschreibung

Die Erfindung betrifft einen Drehschwingungsdämpfer mit einer Lagereinrichtung nach dem Oberbegriff des Anspruches 1. Ein derartiger Dämpfer ist aus des EP-A- 423 243 bekannt.

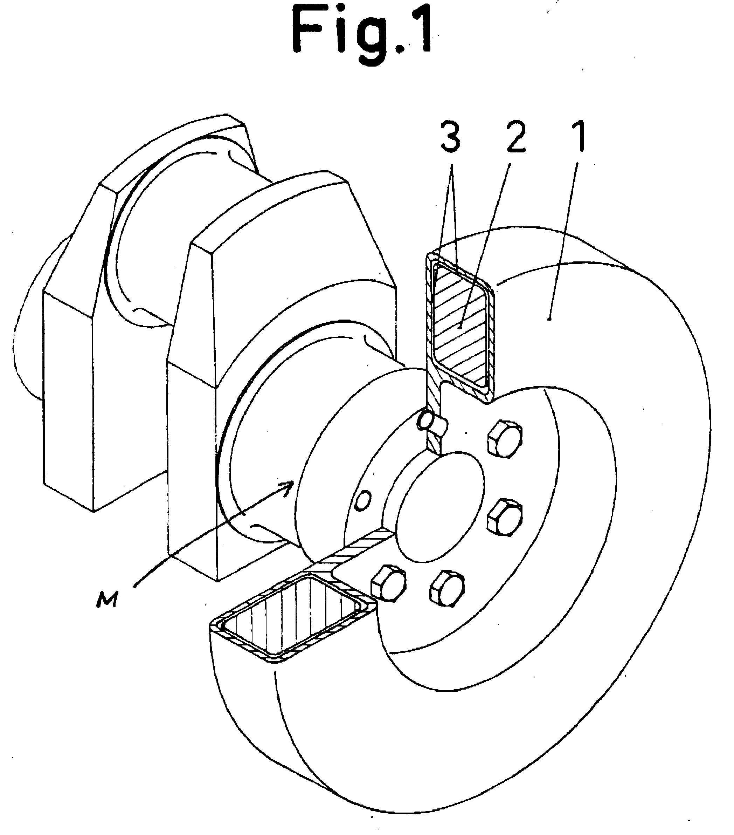

Viskositäts-Drehschwingungsdämpfer bestehen üblicherweise aus einem ringförmigen Gehäuse (Nr. 1 in Fig. 1), das einen Schwungring umschließt (Nr. 2 in Fig. 1). Das Gehäuse wird drehsteif mit einer Maschinenwelle - häufig einer Motorkurbelwelle - verbunden, deren Drehschwingungen gedämpft werden sollen.

Dämpfergehäuse und Schwungring folgen der mittleren Drehgeschwindigkeit der Maschinenwelle ohne Schlupf. Ihre Drehschwingungen hingegen, die sich der gleichmäßigen Drehung überlagern, übertragen sich zunächst nur auf das Dämpfergehäuse. Der Schwungring würde gleichförmig rotieren, wenn ihn nicht das Dämpfungsmedium, das den engen Scherspalt (in Fig.1 Nr. 3) ausfüllt, ans Gehäuse ankoppeln würde. Diese Koppelung ist elastisch und dämpfungsbehaftet. Infolgedessen treten zwischen Gehäuse und Schwungring Relativ-Drehwinkel von z.B. bis zu ± 1 Winkelgrad im Takte der erregenden Wellenschwingung auf.

Da sich der Schwungring also in der Gehäusekammer bewegen kann, benötigt er Führungselemente.

Bekannt sind z.B. Drehschwingungsdämpfer mit einer oder zwei Lagerbuchsen aus Bronze oder aus einem verschleißarmen Duroplast (siehe DE PS 951 965).

Nach einer weiteren Idee wird der gesamte Schwungring mit einer gleitfreundlichen Kunststoffschicht umhüllt (GB 1 397 571).

Vorbekannt sind geteilte, lose eingelegte Lagerelemente : ein Radialband wurde entweder mit zwei seitlichen Anlaufringen (siehe die gattungsgemäße EP 0 423 243) oder mit einer Vielzahl axialer Führungsplättchen kombiniert.

Es gab aber auch Versuche, mögliche hydrodynamische Kräfte des Dämpfungsmediums zur Führung des Schwungrings heranzuziehen (DE-AS 1 246 331).

Nach weiteren Veröffentlichungen sollte der Schwungring von metallischen Federn (DE-OS 28 18 295/296) oder biegsamen Kunststoffteilen (DE-PS 26 44 808) verschleißfrei geführt werden. Im Stand der Technik finden sich darüberhinaus Beispiele einer Wälzlagerung des Schwungrings (DE-OS 2 118 866). Die US 3,552,230 zeigt ein winkliges Lagerelement, welches aus einem vorgespannten Elastomer besteht, das durch die Relativbewegung auf Scherung beansprucht wird (siehe GB 1 307 607).

Eine Gleitlagerung aus entsprechend gewählten Kunststoffelementen ist nach der Erkenntnis der vorliegenden Erfindung eine durchaus geeignete Form zur Führung des Schwungringes. Problemtisch sind allerdings die notwendigen, komplizierten Montagevorgänge, die den Anforderungen an eine moderne vollautomatische Fertigung nicht gerecht werden.

Die Erfindung zielt darauf ab, einen Drehschwingungsdämfer mit Lagereinrichtung derart weiterzubilden, daß eine unkomplizierte vollautomatische Montage möglich ist.

Die Erfindung erreicht dieses Ziel durch den Gegenstand des Anspruches 1. Vorteilhafte Weiterbildungen der Erfindung sind den Unteransprüchen zu entnehmen.

Nach den Erkenntnissen der vorliegenden Erfindung wird bei einer Lagerung mit geeigneten Kunststoff-Elementen trotz der Einflüsse von Wechselscherung, Dämpfungsmedium und Betriebstemperatur eine befriedigende Lebensdauer erreicht. Eine getrennte, aus Radialband und mehreren Axialplättchen bestehende Schwungringlagerung erschwert jedoch eine vollautomatische Dämpfermontage; ferner ist das benötigte Paar Axialringe der zweiten Lagervariante aufwendig herstellbar. Diese Probleme vermeidet die erfindungsgemäße Lagerung nach Art einer "Bundbuchse".

Eine Schwungringlagerung mit L-förmigem Querschnitt ist zwar bereits aus der DE-OS 2 118 864 bekannt. Hier dient der L-Ring jedoch nicht zur Gleitlagerung sondern zur elastischen Schwunringfixierung (siehe z.B. die Schraubenfedern in Fig. 1 der DE-OS 2 118 864). Das L-förmige Elementepaar ermöglicht vielmehr eine gummi-elastische Schwungring-Abstützung mit der Charakteristik der Schraubenfederabstützung.

Die vorliegende Erfindung beruht dagegen u.a. auch auf der Idee, die Bundbuchse nicht vorzuspannen, sondern lose zwischen Gehäuse und Ring zu legen. Die Buchse dient damit als echte Lagerung zwischen Gehäuse und Schwungring, wobei beide Elemente bei Relativbewegungen auf der Bundbuchse gleiten. Im Gegensatz zum Stand der Technik (z.B. US 3,552,230) wird dabei ein möglichst niedriger Reibwert angestrebt.

Nachfolgend wird die Erfindung unter Bezug auf die Zeichnung näher beschrieben. Es zeigt:
Fig. 1 einen Viskositäts-Drehschwingungsdämpfer nach dem Stand der Technik;
Fig. 2 - 11 verschiedene erfindungsgemäße Viskositäts-Drehschwingungsdämpfer und/oder deren Lagereinrichtungen.

Fig. 1 zeigt einen Viskositäts-Drehschwingungsdämpfer mit einem ringförmigen Gehäuse 1, das einen Schwungring 2 umschließt. Das Gehäuse 1 ist drehsteif mit einer Maschinenwelle M - einer Motorkurbelwelle - verbunden, deren Drehschwingungen gedämpft werden. Zwischen Gehäuse 1 und Schwungring 2 befindet sich ein mit einem Dämpfungsmedium (Fluid) gefüllter Scherspalt 3.

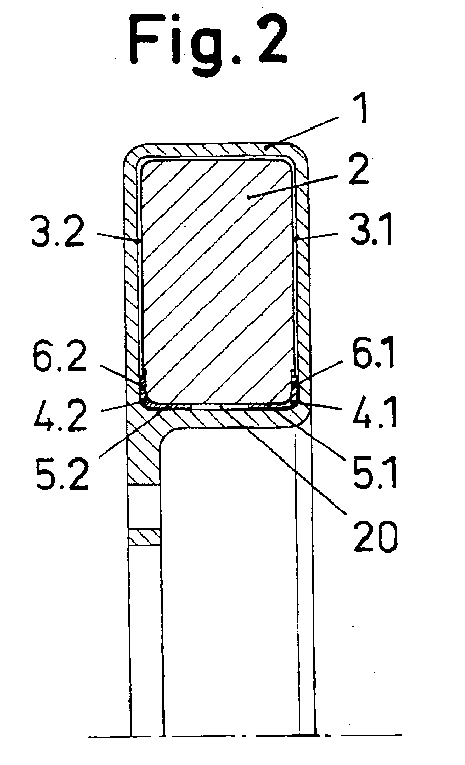

Nach Fig. 2 wird der Schwungring 2 durch zwei Lagereinrichtungen - hier Bundbuchsen 4.1 und 4.2 mit L-förmigem Querschnitt - geführt.

Die Bundbuchsen 4.1 und 4.2 der vorliegenden Erfindung weisen vorteilhaft einerseits eine dünnwandige Radiallagerpartie 5, 5.1 und 5.2 auf, die mit gleitlagerartigem Spiel den Schwungring in radialer Richtung führt. Hieran angeformt ist eine Axiallagerpartie 6, 6.1 und 6.2, die den Schwungring 2 in axialer Richtung gegenüber den Gehäusewänden abstützt.

Zur vollständigen Lagerung des Schwungrings 2 gehören zwei identische Bundbuchsen 4.1 und 4.2. Sie gewährleisten nicht nur die möglichst verschleißarme Gleitlagerung des Ringes, sondern halten auch die seitlichen, mit Dämpfungsmedium gefüllten Scherspalte aufrecht. Zwischen den Radiallagerpartien 5 beider Bundbuchsen verbleibt vorzugsweise ein Hohlraum 20, der als Vorrats- oder Ausdehnungsraum für Dämpfungsfluid genutzt wird.

Die Bundbuchsen 4.1 und 4.2 bestehen aus verschleißarmem, hitzebeständigen und gegenüber dem Dämpfungsmedium inerten Werkstoff, vorzugsweise aus Kunststoff.

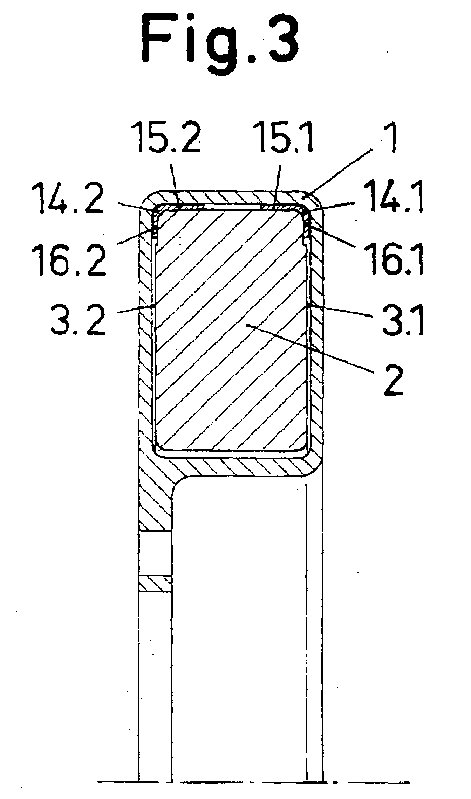

Fig. 2 zeigt eine Innenlagerung, bei welcher der Schwungring 2 in radialer Richtung von seiner inneren Bohrung her geführt wird. Bei der Außenlagerung (Fig. 3) dient dagegen der Außenumfang des Schwungrings 2 als Lagerbahn; diese Ausführung ist in Fig. 3 dargestellt. Die Axiallagerpartien 16.1 und 16. 2 der Bundbuchsen 14.1 und 14.2 (Radiallagerpartien 15) weisen hier nach innen, also auf die Drehachse hin.

Die beiden Lager- bzw. Bundbuchsen sind derart ausgelegt, daß ihre Radiallagerpartien 5 den Schwungring gegenüber dem Dämpfergehäuse in radialer Richtung führen, wobei ihre Axiallagerpartien 6 eine axiale Führung gewährleisten und die Scherspalte 3 aufrechterhalten.

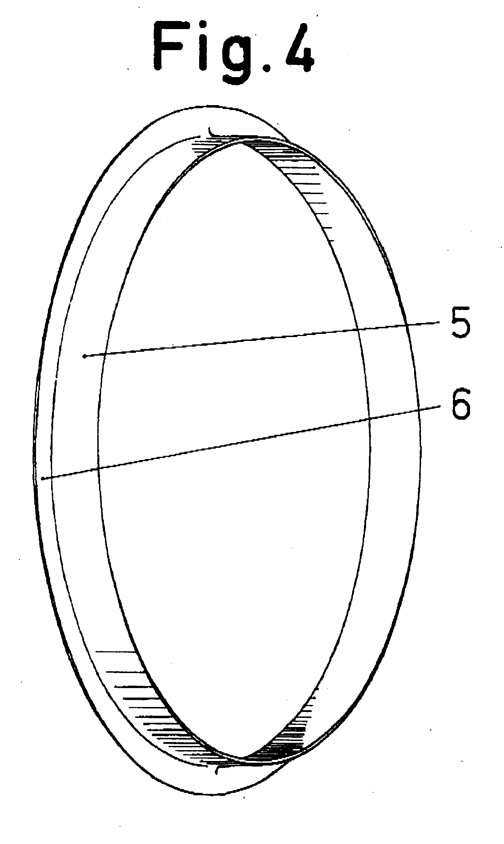

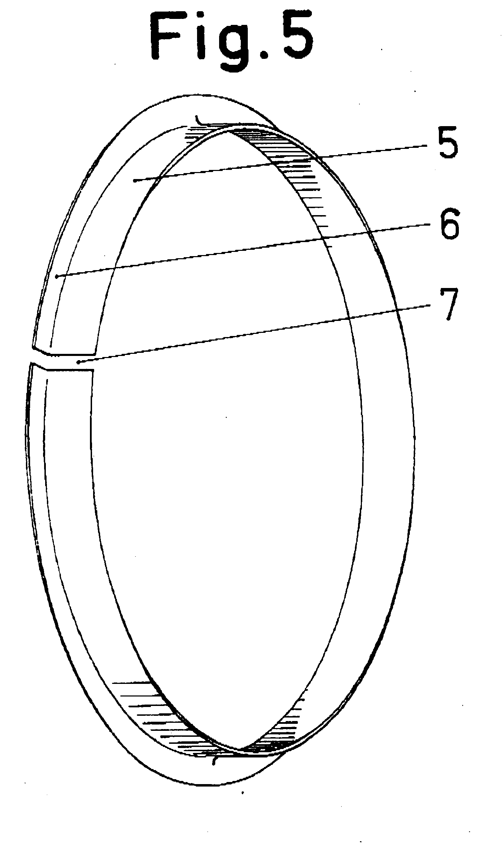

Weitere Varianten der Erfindung eregeben sich durch veränderte Ausgestaltungen der Bundbuchsen 4. So zeigt Fig. 4 eine Ausführungform der Bundbuchse 4 als geschlossener Winkelring und Fig. 5 eine Ausführungsform, bei welcher der Winkelring an einer Stelle seines Umfangs gerade geschlitzt ist (siehe Schlitz 7).

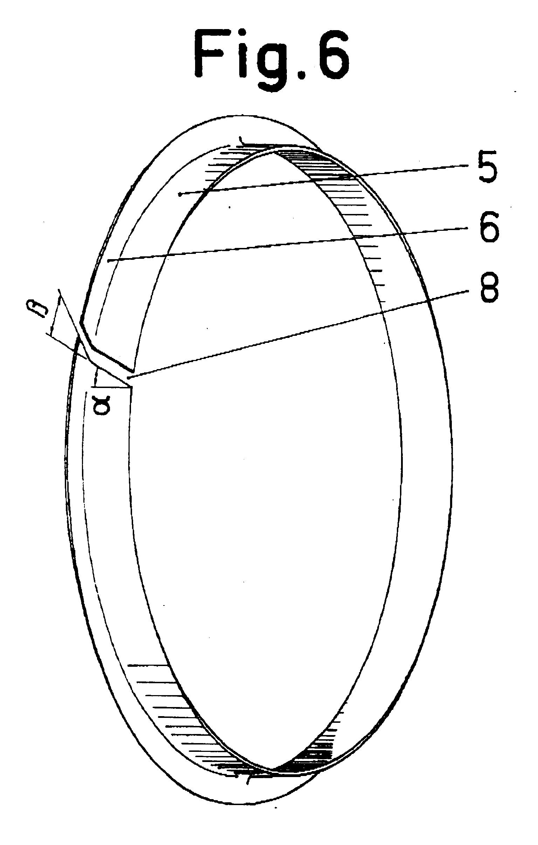

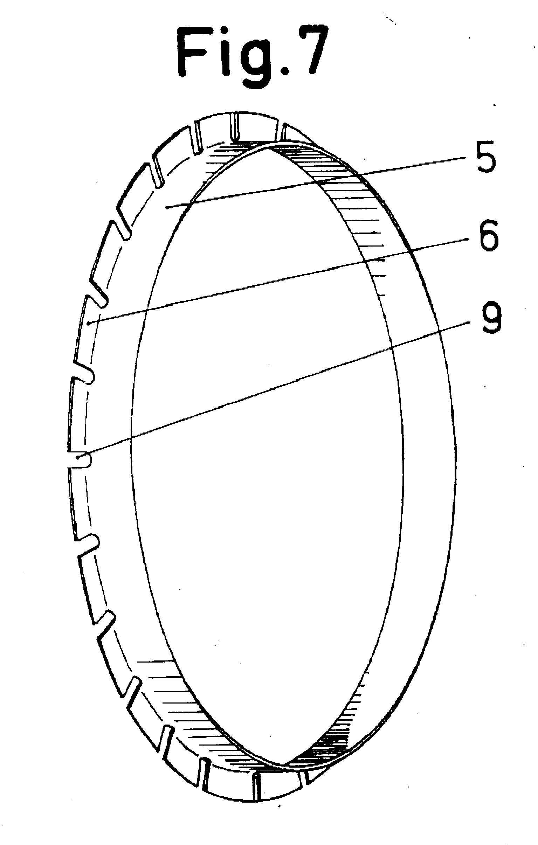

Nach Fig. 6 ist der Winkelring an einer Stelle seines Umfangs unter Schrägungswinkeln geschlitzt (Schlitz 8) - Fig. 7 zeigt eine Variante, bei der die Axiallagerpartie mehrfach radial geschlitzt ist (radiale Schlitze 9).

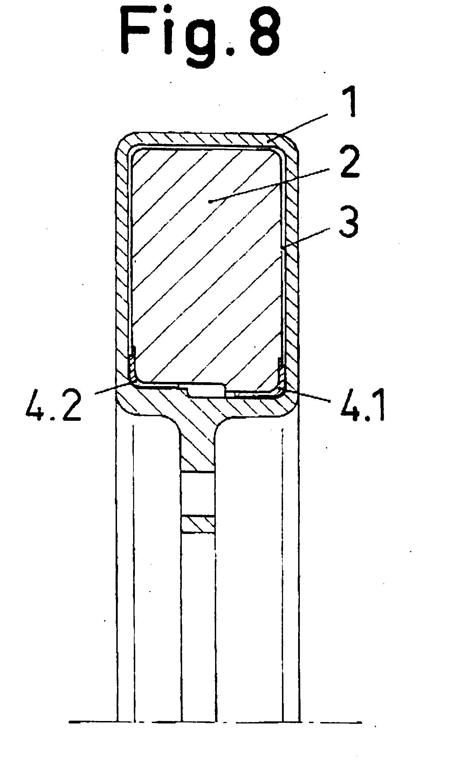

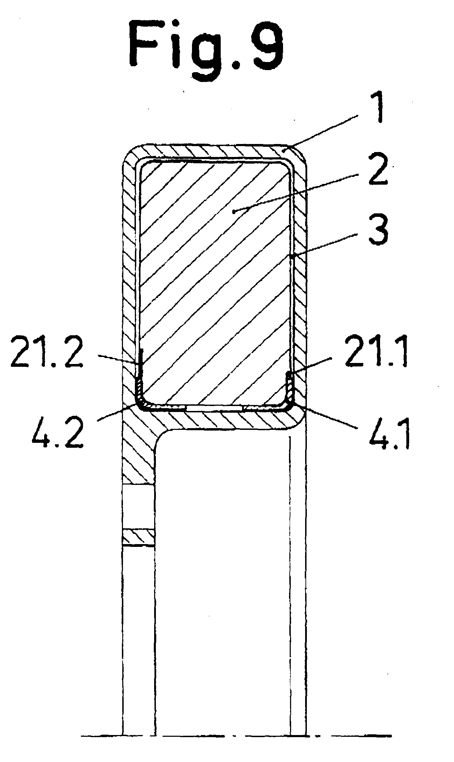

Nach Fig. 8 ist auch eine Variante denkbar, bei der die Bundbuchsen 4.1 und 4.2 unterschiedliche Innendurchmesser aufweisen und innerhalb des Dämpfergehäuses 2 auf Radiallagerbahnen entsprechend unterschiedlichen Durchmessers gleiten. In Fig. 9 sind die seitlichen Einstiche 21.1 und 21.2 im Schwungring, die zur Aufnahme der Axiallagerpartien 6, 16 dienen, durch unterschiedliche Außendruchmesser begrenzt.

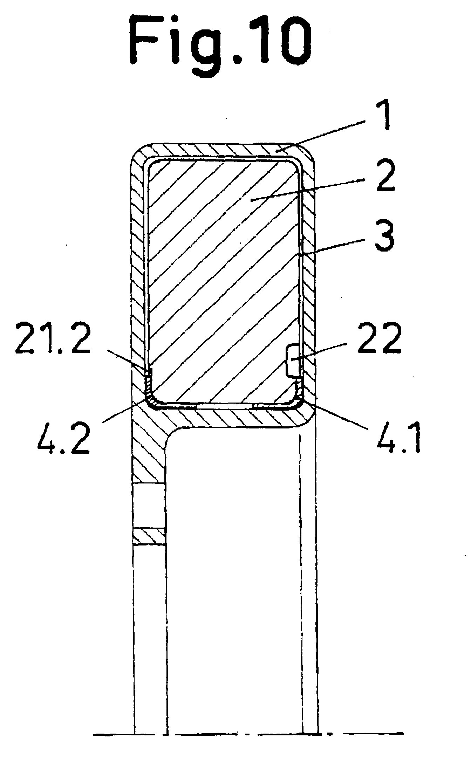

Fig. 10 zeigt eine Variante der Erfindung, bei welcher einer der seitlichen Einstiche im Schwungring als zusätzlicher Vorratsraum 22 für Fluid (Vertiefungsraum) im Ring 2 ausgebildet ist.

### Bezugszeichenliste

- Dämpfergehäuse: 1
- Schwungring: 2
- Scherspalt: 3
- Bundbuchse: 4, 4.1, 4.2 sowie 14, 14.1 und 14.2
- Radiallagerpartien: 5 und 15
- Axiallagerpartien: 6 und 16
- Gerade Stoßfuge: 7
- Schräge Stoßfuge: 8
- Radiale Schlitze: 9
- Innerer Vorratsraum: 20
- Seitlicher Einstich: 21
- Seitlicher Vorratsraum: 22

## Patentansprüche

1. Drehschwingungsdämpfer mit
a) Lagereinrichtungen zur Führung eines Schwungringes (2) in einem Gehäuse (1),
b) wobei die Lagereinrichtungen den Schwungring (2) gegenüber dem Dämpfergehäuse (1) führen, und lose bzw. ohne Vorspannung zwischen Gehäuse (1) und Ring (2) eingesetzt sind sowie vorgegebene Scherspalte (3) zwischen Gehäuse (1) und Ring (2) aufrechterhalten,
**dadurch gekennzeichnet, daß**
c) die Lagereinrichtungen aus Kunststoff bestehen,
d) als Lagereinrichtungen im Querschnitt L-förmige Lagerbuchsen (4,14)-Bundbuchse genannt - vorgesehen sind, deren Radiallagerpartien (5,15) den Schwungring (2) gegenüber dem Dämpfergehäuse (1) in radialer Richtung führen und deren Axiallagerpartien (6,16) eine axiale Führung gewährleisten,
e) zwei der L-förmigen Lagerbuchsen (4,14) im inneren oder äußeren Umfangsspalt des Schwungringes angeordnet sind.

2. Drehschwingungsdämpfer nach Anspruch 1, dadurch gekennzeichnet, daß die Lagerbuchsen (4,14) als geschlossene Winkelringe ausgelegt sind.

3. Drehschwingungsdämpfer nach Anspruch 1, dadurch gekennzeichnet, daß die Lagerbuchsen (4,14) als Winkelringe ausgelegt sind, die an einer Stelle seines Umfangs gerade geschlitzt sind.

4. Drehschwingungsdämpfer nach Anspruch 3, dadurch gekennzeichnet, daß die Winkelringe (4,14) an einer Stelle ihres Umfangs unter Schrägungswinkeln α,β geschlitzt sind.

5. Drehschwingungsdämpfer nach Anspruch 3 oder 4, dadurch gekennzeichnet, daß die Axiallagerpartien (6,16) der Bundbuchsen (4,14) mehrfach radial geschlitzt sind.

6. Drehschwingungsdämpfer nach einem der vorstehenden Ansprüche, dadurch gekennzeichnet, daß die Lagerbuchsen (4,14) unterschiedliche Innendurchmesser aufweisen und innerhalb des Dämpfergehäuses auf Radiallagerbahnen entsprechend unterschiedlichen Durchmessers gleiten.

7. Drehschwingungsdämpfer nach einem der vorstehenden Ansprüche, dadurch gekennzeichnet, daß seitliche Einstiche (21) im Schwungring (2), die zur Aufnahme der Axiallagerpartien (6,16) dienen, durch unterschiedliche Durchmesser begrenzt sind.

8. Drehschwingungsdämpfer nach Anspruch 7, dadurch gekennzeichnet, daß einer oder beide der seitlichen Einstiche im Schwungring als zusätzlicher Vorratsraum (22) vertieft ausgebildet sind.

## Claims

1. Rotational vibration damper, comprising
(a) bearing means for guiding a flywheel ring (2) in a housing,
(b) said bearing means guiding said flywheel ring (2) relative to said damper housing (1) and being inserted loosely or without any bias, respectively, between said housing (1) and said ring (2) while maintaining predetermined shearing slots (3) between said housing (1) and said ring (2),
**characterised in that**
(c) that said bearing means are made of a synthetic material,
(d) that bearing shells (4, 14) having an L-shaped cross-sectional shape - referred to as flange sleeves - are arranged as bearing means having journal-type radial bearing parts (5, 15) which guide said flywheel ring (2) relative to said damper housing (1) in a radial direction, and having thrust bearing parts (6, 16) which ensure an axial guidance, and
(e) said two of said L-shaped bearing shells (4, 14) are arranged in the peripheral inside or outside slot of said flywheel ring.

2. Rotational vibration damper according to Claim 1, characterised in that said bearing shells (4, 14) are designed in the form of closed ring angle steel elements.

3. Rotational vibration damper according to Claim 1, characterised in that said bearing shells (4, 14) are designed in the form of ring angle steel elements presenting straight slots at one position on their periphery.

4. Rotational vibration damper according to Claim 3, characterised in that said ring angle steel elements (4, 14) present slots at angles of inclination α, β at one position on their periphery.

5. Rotational vibration damper according to Claim 3 or 4, characterised in that said thrust bearing parts (6, 16) of said flange sleeves (4, 14) present a plurality of radial slots.

6. Rotational vibration damper according to any of the preceding Claims, characterised in that said bearing shells (4, 14) present different inside diameters and slide inside said damper housing on slideways having appropriately different diameters.

7. Rotational vibration damper according to any of the preceding Claims, characterised in that lateral recesses (21) in said flywheel ring (2), which serve to receive some of said thrust bearing parts (6, 16), are limited by different diameters.

8. Rotational vibration damper according to Claim 7, characterised in that one or both of said lateral in said flywheel ring present a recessed configuration as reserve space.

## Revendications

1. Amortisseur de vibrations rotatives, comprenant
a) des moyens de palier à guider un anneau volant (2) dans un carter,
b) lesdits moyens de palier guidant ledit anneau volant (2) relativement audit carter (1) de l'amortisseur et étant inséré, de façon mobile ou respectivement sans précontrainte, entre ledit carter (1) et ledit anneau (2) en maintenant des fentes de cisaillement données (3) entre ledit carter (1) et ledit anneau (2),
**caractérisé en ce**
c) que lesdits moyens de palier sont formés en matière synthétique,
d) que des coussinets (4, 14) à une section transversale en L - nommés coussinets-douilles - sont disposés en tant que moyens de palier, dont les parties de palier (5, 15) guident ledit anneau volant (2) relativement audit carter (1) de l'amortisseur en sens radiale et dont les parties de butée (6, 16) assurent un guidage axial, et
e) en ce que deux desdits coussinets (4, 14) en L sont disposés dans la fente périphérique intérieure ou extérieure dudit anneau volant.

2. Amortisseur de vibrations rotatives selon la revendication 1, caractérisé en ce que lesdits coussinets (4, 14) sont conçus sous forme de cornières annulaires fermées.

3. Amortisseur de vibrations rotatives selon la revendication 1, caractérisé en ce que lesdits coussinets (4, 14) sont conçus sous forme de cornières annulaires qui présentent des fentes droites à une position sur leur périphérie.

4. Amortisseur de vibrations rotatives selon la revendication 3, caractérisé en ce que lesdites cornières angulaires (4, 14) présentent des fentes aux angles d'inclinaison α, β à une position sur leur périphérie.

5. Amortisseur de vibrations rotatives selon la revendication 3 ou 4, caractérisé en ce que lesdites parties de butée (6, 16) desdits coussinets-douilles (4, 14) présentent des fentes radiales multiples.

6. Amortisseur de vibrations rotatives selon une quelconque des revendications précédentes, caractérisé en ce que lesdits coussinets (4, 14) présentent des diamètres intérieurs différents et glissent au dedans dudit carter de l'amortisseur sur des glissières de palier aux diamètres appropriément différents.

7. Amortisseur de vibrations rotatives selon une quelconque des revendications précédentes, caractérisé en ce que des entailles latérales (21) dans ledit bague volant (2), qui servent à recevoir desdites parties de butée (6, 16), sont limitées par des diamètres différents.

8. Amortisseur de vibrations rotatives selon la revendication 7, caractérisé en ce qu'une desdites entailles latérales, ou toutes les deux, dans ledit bague volant ont une configuration crevée en tant qu'un espace de réserve.
